(19)

**Europäisches Patentamt**

**European Patent Office**

**Office européen des brevets**

(11) **EP 4 391 270 B1**

(12) **EUROPEAN PATENT SPECIFICATION**

(45) Date of publication and mention of the grant of the patent:
**29.10.2025 Bulletin 2025/44**

(21) Application number: **23217187.6**

(22) Date of filing: **15.12.2023**

(51) International Patent Classification (IPC):
*H02J 3/01* (2006.01)     *H02J 3/48* (2006.01)
*H02J 3/36* (2006.01)

(52) Cooperative Patent Classification (CPC):
**H02J 3/48; H02J 3/01; H02J 3/36;** H02J 2203/20

(54) **CONTROL METHOD AND SYSTEM FOR IMPROVING POWER NETWORK STABILITY**

STEUERUNGSVERFAHREN UND -SYSTEM ZUR VERBESSERUNG DER STABILITÄT EINES STROMNETZES

PROCÉDÉ ET SYSTÈME DE COMMANDE POUR AMÉLIORER LA STABILITÉ D'UN RÉSEAU ÉLECTRIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.12.2022 LU 503255**

(43) Date of publication of application:
**26.06.2024 Bulletin 2024/26**

(73) Proprietor: **Luxembourg Institute of Science and Technology (LIST)**
**4362 Esch-sur-Alzette (LU)**

(72) Inventors:
• **RODRIGUEZ CORTES, Pedro**
**4362 Esch-sur-Alzette (LU)**
• **BALTAS, Nicholas Gregory**
**4362 Esch-sur-Alzette (LU)**

(74) Representative: **Ipsilon Benelux**
**76, rue de Merl**
**2146 Luxembourg (LU)**

(56) References cited:
• **H-P BECK ET AL: "Virtual synchronous machine", ELECTRICAL POWER QUALITY AND UTILISATION, 2007. EPQU 2007. 9TH INTERNATIONAL CONFERENCE ON, IEEE, PISCATAWAY, NJ, USA, 9 October 2007 (2007-10-09), pages 1 - 6, XP031226044, ISBN: 978-84-690-9441-9**
• **ZHANG XIANGYU ET AL: "Virtual Shaft Control of DFIG-Based Wind Turbines for Power Oscillation Suppression", IEEE TRANSACTIONS ON SUSTAINABLE ENERGY, IEEE, USA, vol. 13, no. 4, 26 July 2022 (2022-07-26), pages 2316 - 2330, XP011920946, ISSN: 1949-3029, [retrieved on 20220727], DOI: 10.1109/TSTE.2022.3194164**

# EP 4 391 270 B1

## Description

### Technical field

The invention lies in the field of controlling power converters in electrical grids. In particular, the invention relates to a system and method for dynamically controlling the active power exchanged between coupled grid-connected power converters, electrically interconnected through a power grid

### Background of the invention

Interconnection of electrical areas in power systems is an essential issue due to economic and reliability-related reasons since such interconnection brings flexibility for optimizing power flows and allows sharing reserves to respond to potential contingencies in the system. Moreover, interconnection ensures that loads have multiple supply paths, thereby improving a supply reliability. Generally, electrical areas are interconnected though passive alternative current, AC, tie-lines since this is a cost-effective solution when the interconnected areas share the same nominal frequency and voltage and are geographically close each other. However, when areas with different nominal frequencies or voltages should be interconnected, or when the geographic distance between them is significant, power conversion stations are often required to actively interconnect such areas and to regulate power flows by using an AC-DC-AC power conversion configuration. Due to the ever-increasing demand, the rapid growth of renewable energy sources, and the advances in power conversion technologies, interconnection of power systems through power electronics-based active systems, such as multi-terminal high-voltage dc systems, MT-HVDC, has become an increasingly popular and effective interconnection solution in modem power systems.

As the heterogeneity and the capacity of power systems grows, their operational complexity also increases, which raises concerns regarding system stability, specifically dynamic stability in interconnected systems. One of the typical concerns regarding stability in large interconnected systems is the occurrence of sub-synchronous oscillations in tie-lines. Such power oscillations have been traditionally caused by the effect of long tie-lines, with high impedance, which could not be naturally damped by electromechanical generators, thus requiring the use of dedicated control systems. Even though such sub-synchronous oscillations have been studied for decades, they have undergone an increasing attention in recent years since they can be a consequence of the negative damping introduced by the control systems of large renewable power plants and power stations when interacting either with the electric grid or with other plants and stations.

The most widely used method to deal with sub-synchronous oscillation damping in interconnected power systems is the power system stabiliser, PSS, as explained in P. Kundur, "Power System Stability and Control", McGraw-Hill Education, 1994 and G. Gurrala and I. Sen, "Power System Stabilizers Design for Interconnected Power Systems", IEEE Trans. Power Syst., vol. 25, no. 2, pp. 1042-1051, May 2010, for example. Generally, the PSS takes the generator's frequency or power, or both, as input signals to calculate a reference signal for the generator's exciter. A PSS regulates the generator's instantaneous power injection to be perfectly synchronized with a given sub-synchronous grid oscillation to be attenuated. However, using a PSS is not a panacea since power oscillations generated by the interaction between power plant/station controllers, generally driven by power converters, are more likely to occur in the weaker ties, where PSSs have a minor presence and reduced damping contribution. Moreover, due to the complexity added by interconnections, choosing the optimal tuning parameters for the PSS's gain and compensation block is a complex task. In addition, the tuning of the PSS's parameters often discards the influence of network reconfiguration, making it less resilient to potential contingencies in the system.

Even though interconnected electrical areas in power systems benefit from one another in terms of load sharing and capacity reserve, they also share in the problems, so disturbances in an area may lead to voltage/frequency instabilities in other interconnected areas. Another concern is the widespread of blackouts in a large-scale interconnected system. In fact, the interconnection might facilitate the spread of severe transient disturbances from one area to its neighbours, leading to cascaded failures. Thus, stability of interconnected power systems with high share of renewable energy sources has become one of the most challenging requirements to be guaranteed by the system's operator. Guarantying stability of conventional interconnected power systems has accumulated tremendous efforts from academia and industry since the installation of the first power transmission systems. As an example, an islanded system as the one described in N. Senroy and G. T. Heydt, "A Conceptual Framework for the Controlled Islanding of Interconnected Power Systems", IEEE Trans. Power Syst., vol. 21, no. 2, pp. 1005-1006, May 2006 can be used to electrically split an interconnected network into healthy areas and the faulty areas, avoiding the widespread propagation of severe disturbances. However, as the interconnected areas often support each other during disturbances thanks to their inertial nature, forcing system separation during disturbances might further worsen stability conditions in troubled areas. A potential remedy for such a problem as been proposed by improving the overall system damping, so that the probability for triggering instability during system's perturbations is reduced. Another known solution to avoid oscillations between interconnected systems is to reduce the impedance of long interconnection lines. For such purpose, a series capacitor has also been traditionally used to control the apparent line impedance and to thereby inherently increase the system damping.

Development of power electronics in the last decades have brought a gradual paradigm shift in solutions used for handling stability issues in interconnected power systems. Nowadays, the system's damping is not only provided by the PSS of synchronous generators or by passive solutions, but it is also provided by active units based on power electronics-based power converters. The main reason to such a paradigm shift is twofold: firstly, due to the increasing displacement of conventional synchronous generators, the suitable installation location for PSSs becomes fewer; and secondly, power electronics have become an omnipresent technology in the power system. In fact, power electronics are not only used at the load side, but also employed in power generation and transmission systems. Considering their high flexibility, it is apparent that power electronics-based power converters should also participate in enhancing the stability of the interconnected power systems.

In fact, PSS-like control schemes have been proposed for flexible AC transmission systems, FACTS, based on power converters to provide additional damping to oscillatory modes, see for example G. Cao, Z. Y. Dong, Y. Wang, P. Zhang, and Y. T. Oh, "VSC based STATCOM controller for damping multi-mode oscillations" in 2008 IEEE Power and Energy Society General Meeting - Conversion and Delivery of Electrical Energy in the 21st Century, 2008, pp. 1- 8, or F. H. Gandoman et al., "Review of FACTS technologies and applications for power quality in smart grids with renewable energy systems", Renew. Sustain. Energy Rev., vol. 82, pp. 502-514, Feb. 2018. To optimize the performance of power converters in dealing with dynamic stability, more advanced control techniques have also been proposed in the literature. For instance, a robust controller based on linear quadratic gaussian controller to ensure a wider range of effective damping provided by the thyristor-controlled series compensator was presented in K. M. Son and J. K. Park, "On the robust LQG control of TCSCfor damping power system oscillations", IEEE Trans. Power Syst., vol. 15, no. 4, pp. 1306-1312, 2000. Similarly, a linear parameter varying method to improve transient stability of AC-DC interconnected power systems was investigated in Q. Hui, J. Yang, X. Yang, Z. Chen, Y. Li, and Y. Teng, "A robust control strategy to improve transient stability for AC-DC interconnected power system with wind farms", CSEE J. Power Energy Syst., Jun. 2019. The fact that these methods often require the full system model and a high level of mathematic manipulations to obtain the optimal gain hinders their actual deployment.

To address the drawbacks of the aforementioned methods, the concept of virtual synchronous machines, VSM, has been proposed for controlling power converters to provide grid-supporting functionalities H. P. Beck and R. Hesse, "Virtual synchronous machine" in 2007 9th International Conference on Electrical Power Quality and Utilisation, EPQU, 2007, pp. 1-6. Due to the simplicity and effectiveness of VSM, it has attracted much attention from the power systems community. The VSM control schemes are often employed to realize grid-supporting and grid-forming power converters. Basically, most of VSM control schemes are based on the emulation of an electromechanical synchronous generator. Therefore, most of the useful functionalities of a synchronous generator can be provided by a VSM. As the VSM is virtually implemented in a digital controller, all the parameters of the VSM can be tuned and adapted to the operating conditions to avoid some of the drawbacks often faced by conventional synchronous generators, such as low inherent damping. Furthermore, advanced functionalities can be included in the VSM framework with ease. For instance, multiple rotors can be simultaneously emulated in the VSM to provide selective damping to several target oscillatory modes.

From a physical perspective, the VSM enables power converters to have a virtual rotation frequency and inertia. Therefore, these type of VSM-controlled power converters may also be referred to as virtual rotating converters, VRC. Similar to a synchronous generator, a VRC can also provide frequency support for an electrical network in the event of disturbances, as explained for example in A. Tayyebi, D. Groß, A. Anta, F. Kupzog, and F. Dörfler, "Frequency stability of synchronous machines and grid-forming power converters", arXiv, vol. 8, no. 2, pp. 1004- 1018, 2020 and in W. Zhang, D. Remon, J. Rocabert, A. Luna, J. I. Candela, and P. Rodriguez, "Frequency support properties of the synchronous power control for grid-connected converters" ECCE 2016 - IEEE Energy Convers. Congr. Expo. Proc., 2016. Recent works also confirmed that the inertia response produced by the VRC can also support neighbouring areas, see K. S. Skinder, T. Kerdphol, Y. Mitani, and D. Turschner, "Frequency Stability Assessment of Multiple Virtual Synchronous Generators for Interconnected Power Systems" IEEE Trans. Ind. Appl., vol. PP, no. c, pp. 1-1, 2021.

However, even though the above control techniques allow a VRC to provide frequency and voltage control support to the interconnected ac networks, each VRC in an interconnected network still operates independently according to its own tuning parameters. That is, each VRC controller is controlled by only considering its own electrical area, or more specifically, its own point of connection to the grid, rather than considering the interconnected system in which such a VRC is immersed. In fact, there is currently no method to dynamically coordinate the control of multiple VRCs to improve the dynamics and power flows in interconnected power systems beyond the well-known droop scheme. There is not yet any effective and well- accepted solution reported in the state of the art for controlling transient active power flows between interconnected VRCs or other power converters in face of grid events. Additionally, if the parameters of the VRC are not properly set, instabilities may occur even among VRCs interconnected in an electrical system due to control interactions. Consequently, there is a need for coordinating the control actions of all the interconnected power converters in a power network, in order to improve its coherent dynamic response and robustness in case of disturbances.

## Technical problem to be solved

It is an objective of the invention to present a method and system, which overcomes at least some of the disadvantages of the prior art.

## Summary of the invention

In accordance with a first aspect of the invention a control method for improving supply stability in a power network is provided. The power network electrically connects a first power converter to at least one second power converter through a power grid. The method comprises the steps of:

i) providing, for each pair of power converters composed of the first power converter and one of the second power converters, a digital shaft model of a mechanical shaft in a memory element, wherein said digital shaft model comprises a damping factor, an inertia and a stiffness of a mechanical shaft and emulates the electrical coupling between said pair of power converters through said power grid;
ii) obtaining, at a control unit, a pair of input signals from each of said pairs of power converters, wherein the input signals of a pair are indicative of rotating speeds applied to the ends of the corresponding digital shaft model;
iii) determining an active power deviation at the control unit, based on power transfers that are computed for each pair of power converters by applying a rotation equation to the corresponding digital shaft model using the corresponding pair of input signals;
iv) at the control unit, communicating a reference signal to the first power converter, which allows the first power converter to feed the active power deviation into the power grid or to absorb the active power deviation from the power grid, depending on the positivity of the active power deviation.

Preferably, the step of obtaining a pair of input signals may preferably comprise obtaining at least one signal indicating a rotating speed from at least one second power converter, wherein said second power converter emulates a mass rotating at said rotating speed.

The step of obtaining a pair of input signals comprises obtaining at least one measure of an AC grid frequency at the point of connection of at least one second power converter.

Preferably, step of obtaining a pair of input signals may comprise obtaining at least one measure of a DC voltage of a DC bus of at least one second power converter.

The reference signal may preferably comprise an indication of an electrical current intensity to be injected by the first power converter into the electrical grid.

Preferably, the first power converter may be controlled as a rotating mass, and said reference signal may comprise an indication of a load angle of the power converter.

It may be preferred that either the inertia or the stiffness, or both of the inertia and the stiffness of at least one digital shaft model may be set to zero.

In accordance with another aspect of the invention, a control unit is proposed. The control unit comprises

- a memory element in which digital shaft models are stored, each digital shaft model comprising a damping factor, an inertia and a stiffness of a mechanical shaft configured to emulate the electrical coupling between pairs of power converters electrically connected through a power grid, wherein each pair of power converters is composed of the same first power converter and one second power converter;
- receiving means configured to receive a pair of input signal from each of said pairs of power converters, wherein the input signals of a pair are indicative of rotating speeds applied to the ends of the corresponding digital shaft model;

  - computing means configured to

    * determine an active power deviation, based on power transfers that are computed for each pair of power converters by applying a rotation equation to the corresponding digital shaft model using a corresponding obtained pair of input signals;
    * generate a reference signal, which allows the first power converter to feed the determined active power deviation into the power grid or to absorb the determined active power deviation from the power grid, depending on the positivity of the determined active power deviation;

- transmission means configured to communicate said reference signal to the first power converter.

According to a further aspect of the invention, a control system for a power network is proposed. The control system comprises a plurality of control units in accordance with an aspect of the invention. Each control unit is configured to determine an active power deviation for one power converter of a plurality of power converters electrically interconnected through a power grid.

In accordance with yet another aspect of the invention, a power network in which a plurality of power converters are interconnected through a power grid is provided. The power network comprises at least one control unit in accordance with an aspect of the invention for controlling at least one power converter.

The power network may preferably comprise control system in accordance with an aspect of the invention.

According to another aspect of the invention, a computer program comprising computer readable code means is provided, which, when run on a computer system, causes the computer system to carry out the method according to an aspect of the invention.

In accordance with a final aspect of the invention, a computer program product comprising a computer readable medium is provided, on which the computer program according to an aspect of the invention is stored.

By using the proposed invention, it becomes possible to use a controller that digitally emulates an additional mechanical coupling between electrically interconnected power converters through virtual mechanical shafts. The proposed Virtual Multi-Shaft, VMS, controller and associated method for dynamically controlling active power exchanges among multiple power conversion stations physically interconnected in an electrical network sets additional virtual links that emulate the effect of mechanical shafts coupling the conversion stations in order to increase system damping and to reduce instability risk in case of disturbances. This method makes it possible to schedule dynamic active power flows among power conversion stations and to adjust the system's parameters in real-time to ensure proper damping levels in the system under generic operating conditions. The fundamental principle of the proposed controller is to adjust the dynamic power exchange between two or more coupled power conversion stations connected in an electrical grid so that they follow the natural power exchange that would occur between two equivalent masses coupled by a mechanical shaft. This fundamental operation principle is extended to multiple interconnected power conversion stations in a complete power system by emulating a set of virtual mechanical shafts coupling all the power stations of the network. The proposed method contributes to improve the dynamic stability of the electrical grid in case of disturbances and contingencies. The proposed controller and method are capable of dynamically controlling the active power exchanged between power conversion stations interconnected in an electrical grid, such that all the stations support each other during potential perturbations affecting to the system stability.

## Brief description of the drawings

Several embodiments of the present invention are illustrated by way of figures, which do not limit the scope of the invention, wherein:

- Figure 1 shows a schematic illustration of a power system in accordance with a preferred embodiment of the invention, including a control unit in accordance with a preferred embodiment of the invention;
- Figure 2 shows a schematic illustration of a power system in accordance with a preferred embodiment of the invention, including a control unit in accordance with a preferred embodiment of the invention;
- Figure 3 shows a schematic illustration of a power system in accordance with a preferred embodiment of the invention, including a control unit in accordance with a preferred embodiment of the invention;
- Figure 4 provides an illustration of a digital shaft model used in preferred embodiments of the method in accordance with the invention;
- Figure 5 shows a schematic illustration of a power system in accordance with a preferred embodiment of the invention, including a control system in accordance with a preferred embodiment of the invention;
- Figure 6 provides a conceptual control diagram for a control system according to a preferred embodiment of the invention;
- Figure 7 provide a block diagram indicating main steps performed by a control system according to a preferred embodiment of the invention;
- Figure 8 illustrates a power network with three AC areas interconnected through both AC tie-lines and a multi-terminal HVCD network;
- Figure 9 illustrates the power network of Figure 8, including digital shaft models;
- Figure 10 schematically illustrates a control diagram of an active power control loop of a power converter including a control unit according to a preferred embodiment of the invention;
- Figures 11A, B and C provide plots of the dynamic frequency deviation in area 1, 2 and 3 of the power network shown in Figure 8, wherein simulation results obtained using known methods and using a method according to a preferred embodiment of the invention are shown;
- Figures 12A, B and C provide plots of the power flow deviation for different study cases of the power network shown in Figure 8, wherein the results shown in Figures 12B and C are obtained using a method according to a preferred embodiment of the invention.

## Detailed description of the invention

This section describes the invention in further detail based on preferred embodiments and on the figures. Similar reference numbers will be used to describe similar or the same concepts throughout different embodiments of the invention. For example, reference numerals 100, 200, 300, 400 each designate a control unit in accordance with the invention, but in different embodiments thereof.

It should be noted that features described for a specific embodiment described herein may be combined with the features of other embodiments unless the contrary is explicitly mentioned. Features commonly known in the art will not be explicitly mentioned for the sake of focusing on the features that are specific to the invention.

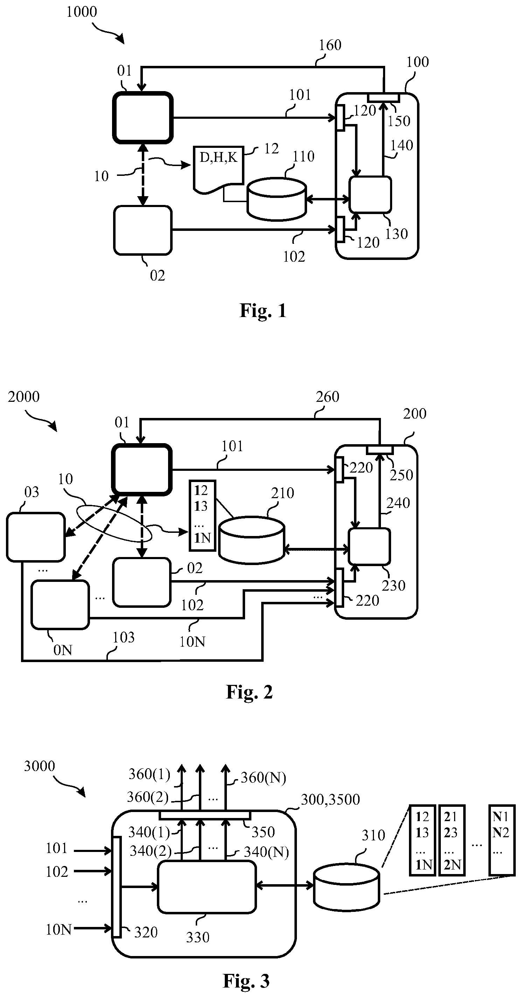

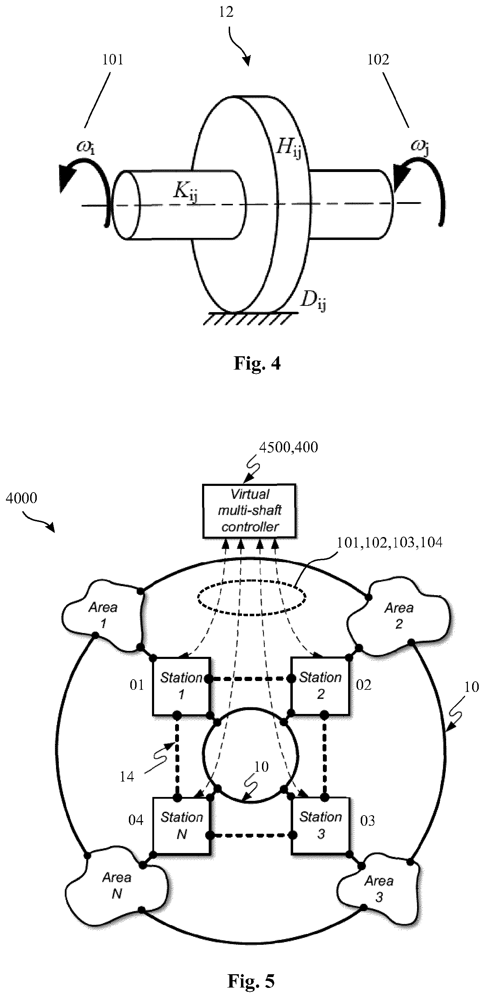

Figure 1 illustrates a power network 1000 according to a preferred embodiment, in which a first power converter 01 is electrically interconnected with a second power converter 02 through a power grid 10. The power network 1000 comprises a control unit 100, which if configured to control the first power converter 01. In order to improve the supply stability in the power network, the control unit uses a method that relies on a digital shaft model 12, also called virtual shaft, which emulates a rotating mechanical shaft that would be used to transfer power between the first power converter 01 and the second power converter 02. The digital shaft model 12 is stored in a memory element 110 to which the control unit 100 has at least read access by means of its parameter values, describing an inertia H, a damping factor D and a stiffness K and corresponding motion equations. These parameters govern the behaviour of a mechanical shaft that interconnects two rotary masses with rotation frequencies $\omega_i$ and $\omega_j$ respectively, as illustrated in Figure 4. The model parameters are chosen in dependence of a wanted target behaviour that the control method should achieve.

The digital shaft model 12 uses a pair of input signals received through appropriate receiving means 120 at the control unit 100, wherein the first input 101 is obtained from the first power converter 01, for example through a dedicated communication channel or through measurements in the power network, and wherein the second input 102 is obtained from the second power converter 02. The input signals 101, 102 are indicative of respective rotating speeds that are applied to the ends of the digital shaft model 12 that mimics the electrical connection between the two power converters 01 and 02. Depending on the type of power converter, the input rotary frequencies 101, 102 may be obtained through various measures. By way of non-limiting examples, the following cases may be considered:

If the power converter providing the input signal is an AC node, an estimate of the rotational speed applied to the corresponding end of the digital shaft model is provided by the grid frequency $\omega_{grid}$.

If the power converter providing the input signal is on a DC bus, an estimate of the rotational speed applied to the corresponding end of the digital shaft model is provided by measuring the DC bus voltage and computing:

$$\frac{1}{2} J_i \omega_{i,shaf}^2 = \frac{1}{2} C_i V_{dc\_grid}^2 \;.$$

If the power converter is internally controlled by a rotating shaft model, the rotational frequency of that model is provided as input signal at the corresponding end of the digital shaft model used by the control unit 100.

The control unit 100 comprises a processor 130 configured, for example through appropriately formulated software code instructions, to apply a rotation equation to the digital shaft model 12 by using the pair of input signals 101, 102 as inputs. Rotation equations for a mechanical shaft are for example provided in Equations (3) and (4) here below. As a result, an active power deviation 140 is obtained. If the resulting active power deviation is positive, this means that the first power converter 01 should inject correspondingly more power into the power grid 10 to stabilize the power signal on its link to the second power converter 02. If the resulting active power deviation is negative, the first power converter should absorb the corresponding power. Using appropriate transmission means 150, a reference signal 160 for controlling the first power converter 01 is therefore communicated to the first power converter 01. Once the reference signal 160 is received, the first power converter 01 implements the corresponding determined active power deviation 140.

The reference signal 160 may, by way of a non-limiting example, communicate an amount of electrical current which the first power converter 01 should inject into the power grid, in order to deliver the determined active power deviation 140 $p_{shaft}$. The corresponding electrical current may for example be computed by

$$\mathbf{i}_{grid} = \frac{\mathbf{v}}{|\mathbf{v}|^2} p_{shaft} \;.$$

If the power converter 01 is itself controlled using a mechanical shaft model, the reference signal 160 may provide the load angle:

$$\delta = \sin^{-1}\left( \frac{X_{link}}{V_{grid}E_{rotor}} \, p_{shaft} \right).$$

Figure 2 illustrates a power network 2000 according to a preferred embodiment, in which a first power converter 01 is electrically interconnected with a plurality of second power converters 02, 03, ... 0N, where N is an integer, through a power grid 10. The overall functioning is similar as for the power network described in the context of Figure 1. The power network 2000 comprises a control unit 200, which if configured to control the first power converter 01. In order to improve the supply stability in the power network, the control unit uses a method that relies on digital shaft models 12,13, ... 1N also called virtual shafts. A digital shaft model emulates a rotating mechanical shaft that would be used to transfer power between the first power converter 01 and each one of the second power converters 02, 03, ..., 0N respectively. The digital shaft models 12, 13, ..., 1N are stored in a memory element 210 to which the control unit 200 has at least read access by means of its parameter values, describing an inertia H, a damping factor D and a stiffness K and corresponding motion equations for each digital shaft model. These parameters govern the behaviour of a mechanical shaft that interconnects two rotary masses with rotation frequencies $\omega_i$ and $\omega_j$ respectively, as illustrated in Figure 4. The model parameters are chosen in dependence of a wanted target behaviour that the control method should achieve.

Each digital shaft model 12, 13, ..., 1N uses a pair of input signals received through appropriate receiving means 220 at the control unit 200, wherein the first input signal 101 of each pair is obtained from the first power converter 01, and wherein the second input signal of a given pair 102, 103, ...,10N is obtained from a respective one of the second power converters 02, 03, ..., 0N. The input signals 101, 102, 103, ..., 10N are indicative of respective rotating speeds that are applied to the ends of the digital shaft models 12, 13, ..., 1N that mimic the electrical connections between the two power converters 01 and 02, the two power converters 01 and 03, up to the two power converters 01 and 0N respectively

The control unit 200 comprises a processor 230 configured, for example through appropriately formulated software code instructions, to apply a rotation equation to each digital shaft model 12, 13, ..., 1N by using the corresponding pairs of input signals (101,102), (101,103), ..., (101,10N) as inputs. Rotation equations for a mechanical shaft are for example provided in Equations (3) and (4) here below. The resulting partial power deviations per digital shaft model are preferably summed up to obtain an active power deviation 240. Using appropriate transmission means 250, a reference signal 260 for controlling the first power converter 01 is then communicated to the first power converter 01. Once the reference signal 260 is received, the first power converter 01 implements the corresponding determined active power deviation 240.

Figure 3 illustrates a detail of a power network 4000 according to a preferred embodiment, in which a plurality of non-illustrated power converters is electrically interconnected through a power grid. The overall functioning is similar as for the power network described in the context of Figures 1 and 2. The power network 2000 comprises a control unit 300, which if configured to control a plurality of N power converters. As such it may be considered as a control system comprising a plurality of control units that are each similar to the control units as previously described in the context of Figure 1 and 2 respectively. The control system may be implemented in a distributed way in the power network without leaving the scope of the present invention. In order to improve the supply stability in the power network, the control unit 300 uses a method that relies on digital shaft models 12,13, ... 1N also called virtual shaft for determining, as previously described, an active power deviation 340(1) for controlling power converter 01, which is communicated through transmission means 350 to the power converter 01 by the corresponding reference signal 360(1). The control unit 300 uses the same method for controlling the power converter 02: the memory element 310 also comprises digital shaft models 21, 23, ..., 2N for each electrical connection that links the power converter 02 to the power converters 01, ... 0N, and so forth. By applying the corresponding rotation equations and the corresponding input signals 101, 102, ..., 10N, the control unit 300 determines the active power deviations 340(2), ..., 340(N) that are to be applied at the corresponding power converters 02, ..., 0N in order to improve the power signal stability in the power network 3000. The corresponding determined active power deviations are communicated to the power converters 02, ..., 0N by reference signals 360(2), ...,360(N) respectively, similarly to what has been previously described in the context of Figure 2, which deals with the control signal for power converter 01.

In all embodiments, the obtention of input signals 101, 102, ..., 10N at the control unit 100, 200, 300 may comprise pre-filtering steps, in which measures obtained from the corresponding power converters are transformed into rotation frequencies for corresponding digital shaft models, as previously discussed. Further, the control method may only be applied based on a filter that selects a predetermined rotation frequency range and an attenuation factor. Optionally, a discriminator may be used for selecting time periods in which the input signals are indeed used to control the power converters.

Similarly, before transmitting the reference signals 160, 260, 360, the control unit may be configured to select a frequency range and an attenuation factor for the active power deviation 140, 260, 360 to be delivered by the corresponding power converter. If the determined active power deviations outside of a predetermined range, they are discarded. Further optionally, a discriminator may be used for selecting the time periods when the reference signals should be implemented at the corresponding power converters.

In what follows, further preferred embodiments of the invention will be described to highlight specific features and to provide further explanations, without limiting the scope of the invention to these embodiments.

Figure 5 shows the conceptual representation of a set of electrical areas/sections of a power network 4000 in accordance with a preferred embodiment of the invention, which may be potentially interconnected 10 with each other by passive tie-lines, if they have compatible voltage and frequency levels. In case that the nominal voltage and frequency of the electrical areas differ from one another, their interconnection should be conducted by using other active methods different to simple tie-lines. Some grid-connected power conversion stations 01, 02, 03, 04, are connected in such electrical areas. Such conversion stations may have several power conversion ports, thus they may be potentially interconnected through a dedicated active interconnection network, as in the case of a high-voltage dc (HVDC) system. In such a case, the power conversion stations would transform the area's native magnitudes, like voltage and frequency, into the common electrical magnitudes of the active interconnection network such that the active power exchange between the areas is possible. The main objective of the control system 4500 using control units 400 in accordance with the invention as previously described, also referred to as a VMS controller, is to dynamically control the active power exchange between power conversion stations of a grid 10 by emulating the physical effect of mechanical shafts coupling such power conversion stations, as exemplified by the link 14. The VMS controller 4500 uses a set of state inputs 101, 102, 103, 104 to generate an active power deviation reference signal, for each of the coupled power conversion stations. It should be noted that the dynamic power exchange managed by the VMS controller to emulate the effect of the virtual mechanical shafts is also possible when there is no dedicated network interconnecting the power conversion stations. However, each station must have a power system connected to one of its ports to satisfy the active power exchanges set by the VMS controller.

In this embodiment, the power conversion stations are assumed to be power electronics-based power converters. The low-level controllers in each power conversion could be based on any existing control technique. In case the power converters used in the stations are based on the virtual synchronous machine, VSM, techniques, they are referred to as virtually rotation converters, (VRC), in what follows. This is because a power converter controlled by a VSM technique emulates a virtual mass rotating at a synchronous frequency. Under this approach, a conventional grid-following converter could be understood as a VRC with zero inertia.

The objective of the VMS controller 4500, 400 is to enable dynamic control of the power exchanged between interconnected VRCs, or equivalently, power converters 01, 02, 03, 04. That is, the VMS controller reinforces the natural electrical link provided by the electrical grid to contribute into the attenuation of instantaneous angular frequency deviations of the coupled VRCs from their nominal value, despite the fact that the value of the nominal frequency of the interconnected areas may be different from each other, as occurs when asynchronous ac areas are connected through a DC link. Therefore, in case of a transient deviation in the frequencies of the system as a consequence of a perturbation, a transient power exchange between virtually coupled power conversion stations will happen according to the mechanical characteristics of the virtual shafts connecting such stations to minimize the impact of such perturbation in the dynamic stability of the system.

The VMS controller perceives each power conversion station of the interconnected electrical system as a virtual rotating mass. The normalized virtual rotating frequencies of each couple of VRCs are used as input signals for the VMS controller to calculate the instantaneous active power references for such VRCs. Thus, at the system level, the VMS controller emulates a complex virtual mechanical system whose virtual rotating masses are coupled through multiple virtual mechanical shafts. These virtual mechanical shafts will have no effect in the case that all VRCs remain synchronized. However, as soon as a deviation happens among their rotating frequencies, the effect of the virtual shafts emulated in the VMS controller will result in a dynamic power exchange between the power conversion stations, which will depend on the mechanical parameters of such virtual axes.

The basic operating principle of the VMS controller stems from the mechanical connection between two rotating masses. Figure 4 illustrates the conceptual representation of such mechanical system. when connecting the $i^{th}$ and $j^{th}$ rotating masses. In this illustration, the masses are assumed to rotate at angular frequency of $\omega_i$ and $\omega_j$. These two masses are connected by a virtual mechanical shaft, which is characterized by its mechanical parameters, namely, the damping $D_{ij}$, the stiffness $K_{ij}$, and the inertia $H_{ij}$ coefficients. These three mechanical parameters of the shaft determine the dynamic power exchange between the two virtually interconnected rotating masses, which will match the instantaneous active power exchanged between the two virtually coupled power conversion stations. The dynamic behaviour of this mechanical system can be described in terms of transferred power through the well-known rotational motion equation, which is mathematically described by equations (3) and (4), as presented further below.

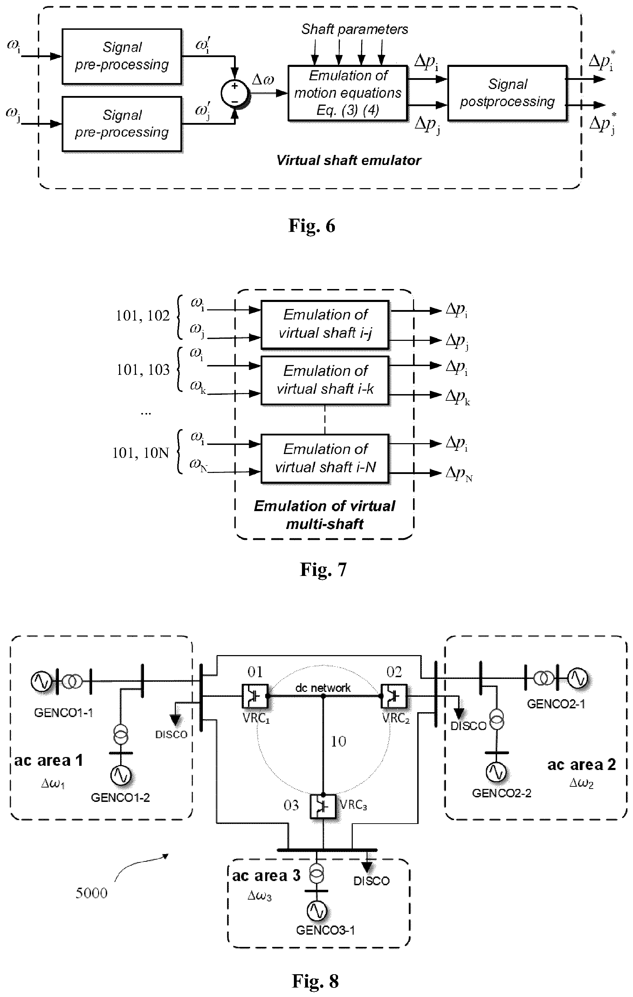

Figure 6 shows the conceptual control diagram of a virtual shaft emulator or control unit used in this embodiment, that interconnects two grid-connected power conversion stations. The virtual shaft emulator receives the virtual rotary frequencies of the two coupled power conversion stations as input signals ($\omega_i$ and $\omega_j$). However, as will be discussed later, the input signals to this emulator might not represent virtual rotary frequencies, but rather any other state signals representing magnitudes that could be transformed into normalized virtual rotary frequencies ($\omega_i'$ and $\omega_j'$) by the emulator's signal pre-processing stages. In fact, this signal pre-processing stage properly prepares and conditions the signals received from the virtually coupled power conversion stations, so that they are in the proper form to be processed in the emulation of the rotational motion equation block. Furthermore, a post-processing block, prepares the output actuation signal of the virtual shaft emulator according to the specifications set by the power conversion stations. As an example of the post-processing block functionality in a particular implementation of the virtual shaft emulator, the actuation signal might be only generated in case of specific transient events or for specific frequency ranges.

As indicated above, the active power deviation to be transferred by an elastic mechanical shaft that couples two rotary masses can be calculated through the rotational motion equations, which are given here below by way of a non-limiting example in Equations (3) and (4). The value for the mechanical parameters of the virtual shaft could be changed at any time according to the application requirements. However, in a particular implementation of the virtual shaft emulator, the block in charge of computing the rotational motion equations linking two coupled power conversion stations could implement more complex equations than the ones shown in (3) and (4), since this block might emulate, for instance, the action of several coupling shafts working in parallel, whose individual parameters could be adjusted as a function of the operating conditions, or only used for specific frequency ranges.

The output signals of the rotational motion emulation block of Figure 6 determine the instantaneous active power deviations to be exchanged between the two coupled power conversion stations, $\Delta p_i$ and $\Delta p_j$. This output signals are post-processed in a dedicated postprocessing block to generate the reference signals sent to the coupled power stations, $\Delta p^*_i$ and $\Delta p^*_j$. Through this block, the output signals of the virtual shaft emulator can be adapted to the requirements imposed by the internal controller of the coupled power conversion stations, and to the limitations imposed by the technology of the power converters and by the interconnection network.

The output signals of the virtual shaft emulation block shown in Figure 6 are provided as additional inputs to the system in charge of setting the operational power flow between two coupled power conversion stations.

In a generic power grid, where multiple power conversion stations can be virtually crosscoupled, the VMS controller can be implemented by setting several virtual mechanical shaft emulators, which virtually cross-couple all the conversion stations of the grid. A simplified diagram of the VMS system or control unit is shown in Figure 7, in which it can be seen how the virtual rotary frequencies of the coupled power conversion stations are all used as input signals 101, 102, ..., 10N, and how the output signals, representing the instantaneous active power deviations to be exchanged by each pair of coupled stations, are generated by corresponding virtual shaft emulation blocks. These power references dynamically regulate the active power to be exchanged among the power conversion units of the grid to improve its overall dynamic stability thanks to the damping effect provided by the set of virtual shafts.

In case the coupled power conversion stations are driven by virtual synchronous machine controllers, the VMS controller can easily regulate the active power exchanged between such power conversion stations by simply using their virtual rotary frequencies ($\omega_i, \omega_j$) as inputs signals for the virtual shaft emulation block shown in Figure 6. However, the VMS controller also works properly in case the coupled power conversion stations are controlled by any other type of conventional controller, such a grid following controllers, which do not emulate a rotary mass with a virtual rotary frequency but estimate the frequency and/or phase angle of the AC voltage of the point of connection to the grid. In such a case, the VMS controller pre-processes the estimated grid frequency at the point of connection of the power conversion station and translates it into a corresponding normalized virtual frequency. From there, the VMS controller determines the active power to be transferred through the virtual shafts. In case the area to be coupled to the interconnection network through a power conversion station works in dc, the VMS controller will use the pre-processing blocks for estimating an equivalent virtual rotary frequency from other suitable energy state signal sent by the power conversion station, for example from the DC-bus voltage.

In this way, the VMS controller can regulate the dynamic active power exchanged among several areas linked to an interconnection network through different types of power conversion stations to minimize the impact of disturbances and contingencies on the system stability.

A further preferred embodiment of this invention is described with illustrative drawings from Figure 8 to Figure 12.

The power system used to present the following preferred embodiment of the VMS controller (control unit) and method is shown in Figure 8, where three AC areas are interconnected 10 through both passive tie-lines and a multi-terminal HVDC (MT-HVDC) network coupled through power conversion stations 01, 02, 03, which will also be referred to as VRC$_1$, VRC$_2$ and VRC$_3$ respectively. Each AC area of the power system may consist of multiple synchronous generators. However, for the sake of simplifying explanations, aggregated models are used to simulate the AC areas of the system. In this manner, Area 1 and Area 2 consist of two generation companies (GENCO) with synchronous generators, whereas Area 3 has only one GENCO with a synchronous generator. Parameters of the three AC areas are provided in Table I. Similarly, the aggregated load of each area is represented as manged by a distribution company (DISCO). The AC-DC power conversion stations of the interconnection MT-HVDC network are controlled as virtual rotating converters (VRCs) by using a virtual synchronous machine (VSM) controller. In particular, the synchronous power controller (SPC) is used to control the VRCs in this embodiment. The virtual multi-shaft (VMS) controller sends active power deviation references to the three AC-DC power conversion stations of the MT-HVDC network to damp frequency oscillations in the system.

TABLE I

| Parameters | Area 1 | | Area 2 | | Area 3 |
|---|---|---|---|---|---|
| | GENCO1-1 | GENCO1-2 | GENCO2-1 | GENCO2-2 | GENCO3-1 |
| Turbine time constant (s) | 0.325 | 0.30 | 0.32 | 0.32 | 0.32 |
| Governor time constant (s) | 0.070 | 0.060 | 0.075 | 0.075 | 0.065 |
| Governor droop (Hz/pu) | 2.45 | 2.55 | 2.70 | 2.70 | 2.45 |

Controlling the frequency in each area of the interconnected system is a crucial issue to guarantee dynamic stability during load/generation variations and contingencies. System operators use different frequency control schemes, with different time scales, to keep the area frequency close to its nominal value. In general, frequency regulation for a given area is accomplished through a power-frequency control scheme, typically implemented through primary and secondary controllers. Such control scheme provides a set of primary references for generation stations in the area based on local frequency measurements, while a central supervisory controller provides a set of secondary references to all the generation stations in the area based on the calculation of the area control error (ACE).

To simulate the dynamic frequency response of the power system shown in Figure 8, it is assumed that the frequency deviation of the $i^{th}$ area of the system ($i = 1, 2, 3$) is given by the simplified equation shown in (1).

$$\Delta\omega_i = \frac{K_{pi}}{1+sT_{pi}}\left(\Delta P_{Gi} - \Delta P_{Li} + \Delta P_{exch,i}\right), \tag{1}$$

where the damping and inertia for the simplified $i^{th}$ AC area are modelled through the gain $K_{pi}$ and the time constant $T_{pi}$, respectively. The term $\Delta P_{Gi}$ denotes the net deviation of the power generated by the generation companies (GENCO) in the $i^{th}$ AC area, represents the term $\Delta P_{Li}$ is the total load deviation (DISCO) in the $i^{th}$ AC area, and $\Delta P_{esch,i}$ represents the net deviation of the power exchanged by the $i^{th}$ area through all its passive ac tie-lines ($\Delta P_{tieAC,i}$) and by the link to the MT-HVDC system ($\Delta P_{tieDC,i}$).

To describe in detail the behaviour of this preferred implementation of the VMS controller, a comparison of the dynamic frequency response in the electrical areas of the power system is shown in Figure 8 when a load step occurs in Area 1, considering three interconnection cases between the electrical areas, which are: i) the electrical areas are interconnected by using only passive AC tie-lines, ii) the electrical areas are interconnected by using both passive ac tie-lines and a MT-HVDC network controlled by a conventional proportional control scheme, iii) the electrical areas are interconnected by using both passive ac tie-lines and a MT-HVDC network controlled by the VMS controller.

In a known conventional control method, used as a baseline in what follows, a conventional proportional controller is used to control the power conversion stations of a HVDC link that interconnects two AC areas of a power system, i.e., the $i^{th}$ and the $k^{th}$ AC areas, which are additionally interconnected through a passive AC tie-line. The input signals for such a proportional controller are the frequency deviations for the $i^{th}$ and the $k^{th}$ ac areas ($\Delta\omega_i$ and $\Delta\omega_k$) and the power flow deviation in the ac tie-line linking both ac areas ($\Delta P_{tieAC,ik}$). The output signal from the proportional controller is used to generate the active power reference signal ($\Delta P_{*tieAC,ik}$) for the power conversion station that couple the $i^{th}$ AC area to the HVDC link. Therefore, the active power reference signal for the $i^{th}$ power conversion station ($\Delta P_{*tieAC,ik}$) of the HVDC interconnection system can be written as:

$$\Delta P_{tieAC,ik}^* = K_i\Delta\omega_i + K_{AC}\Delta P_{tieAC,ik} + K_k\Delta\omega_k, \tag{2}$$

where $K_i$ is the proportional gain to compensate the frequency deviation in the $i^{th}$ area, $K_k$ is the proportional gain to compensate the frequency deviation in the $k^{th}$ area, and $K_{AC}$ is the proportional gain to compensate the power flow deviation in the ac tie-line interconnecting the $i^{th}$ and $k^{th}$ AC areas. In order to keep a balanced power flow, the active power reference, but with negative sign, will be provided as a reference to control the AC-DC power conversion station coupling the kth ac area to the HVDC link. This control scheme, as a baseline scheme, is extended to all the power conversion stations and interconnections of the MT-HVDC network shown in Figure 8 to control the dynamic frequency response in such an interconnected power system.

It is worth mentioning that the small-signal dynamic response of the HVDC link is modelled as a first-order transfer function, with a time constant $T_{DC}$. Moreover, it should be highlighted that the internal controllers of the power conversion stations considered in this preferred use case are based on the SPC, so they naturally behave as VRCs. This particular implementation of the local-level power converter controller is very convenient to present the preferred implementation of the system-level VMS controller, since as each VRC has a virtual rotational speed, which must be perfectly synchronized with the frequency of the AC areas in steady-state, it allows understanding intuitively that several of these power conversion stations could be virtually coupled through the mechanical axes emulated by the VMS controller.

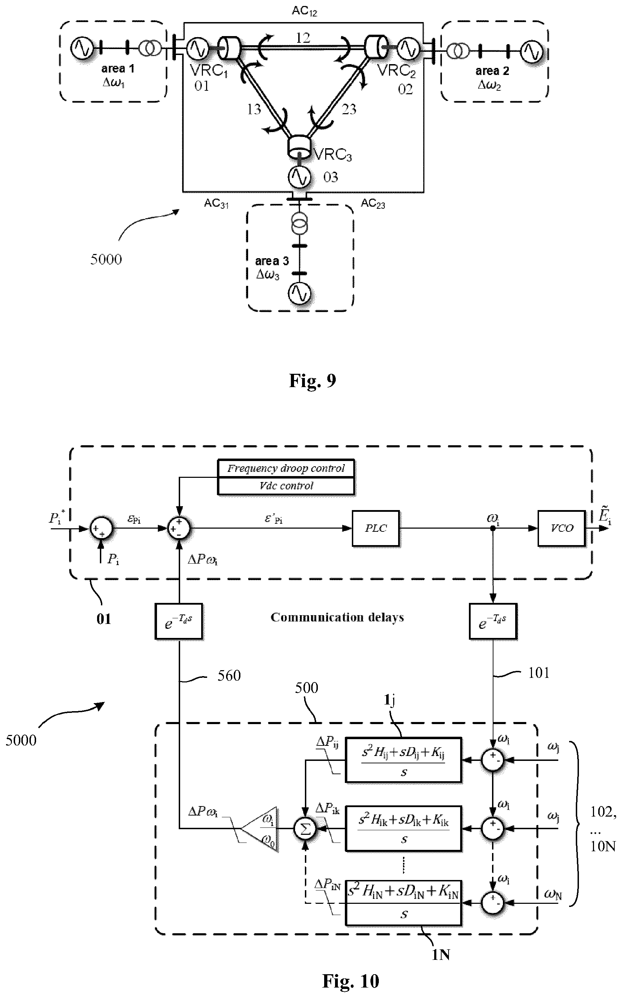

Figure 9 describes in a symbolic way some of the virtual mechanical coupling between the power conversion stations 01, 02, and 03 ($VRC_1$, $VRC_2$ and $VRC_3$) of Figure 8. In this figure, it can be seen how the VMS controller is a multi-input multi-output system that calculates in real-time the instantaneous active power deviations to be transferred through each of the virtual shafts coupling power conversion stations controlled as VRC in case of deviations in their rotational frequencies. However, it is worthy to remind that the VMS controller could also be used to regulate the power exchanged between power conversion stations based on classical control schemes, such as the ones used in grid-following power converters, since a virtual rotation speed might be generated from the measurement of the AC grid frequency, e.g., by using a well-known phase locked loop, PLL, or the energy status of the converter as input variables for the signal pre-processing.

For this preferred embodiment of the VMS controller, the motion equations determining the power transferred from each of the ends of a shaft joining the $i^{th}$ and $i^{th}$ VRCs of Figure 9, with i, j = 1, 2, 3, can be expressed in per unit as:

$$\Delta P_i = \left(2H_{ij}s + D_{ij} + \frac{K_{ij}}{s}\right)\left(\omega_i - \omega_j\right)\frac{\omega_i}{\omega_0}, \quad (3)$$

$$\Delta P_j = \left(2H_{ji}s + D_{ji} + \frac{K_{ji}}{s}\right)\left(\omega_j - \omega_i\right)\frac{\omega_j}{\omega_0}, \quad (4)$$

where $\omega_i$ and $\omega_i$ are the virtual angular frequencies of the $i^{th}$ and $j^{th}$ power conversion stations, $\omega_0$ is the nominal frequency used for normalization (typically the AC grid frequency) and $H_{ij}$, $D_{ij}$ and $K_{ij}$ are the inertia constant, the stiffness and damping factor of the virtual shaft, respectively. Normally, a virtual shaft will have a symmetric performance, that is, $H_{ij} = H_{ji}$, $K_{ij} = K_{ji}$ and $D_{ij} = D_{ji}$, although such symmetry can be modified if necessary.

Equations (3) and (4) are the typical motion equations of an elastic shaft, which are used in the VMS controller to determine the power to be transferred between two coupled VRCs. It should be noted that the power transferred from the $i^{th}$ end of a given shaft does not necessarily coincide with the power transferred from the $k^{th}$ end, due precisely to the power losses and elastic behaviour of the emulated mechanical shaft. Precisely, by properly selecting the mechanical parameters of the virtual axes of the VMS controller, it is not only possible to help all the VRCs in the network to rotate with the same frequency in steady state, but it will also allow changing the natural response of the system to improve its dynamic stability.

To implement a set of cross-coupling shafts in a generic interconnected network with multiple power conversion stations, the VMS controller will receive the frequencies of all the coupled VRCs (i.e., power converters) ($\omega_1$, $\omega_2$... $\omega_N$) as input signals, and compute the dynamic equations of the different coupling virtual axes to determine the power reference to be sent to each of them. Figure 10 shows the implementation of the VMS controller for the $i^{th}$ power conversion station of the system in Figure 9, with i, j, k = 1, 2, 3.

As shown in Figure 10, this scheme can be extended to a number of N stations by simply adding more motion equations to the VMS controller, corresponding to the additional shafts of the system. Considering for example i=1, Figure 10 shows the control unit 500 in the power network 5000, for controlling power converter 01. The input provided at the control unit 500 includes input signals 101 (from power convert 01) and input signals 102, ..., 10N from the 2-N power converters that are electrically interconnected with the power convert 01 through a grid. Based on the input signals and the corresponding digital shaft models, of which one is indicates with reference 1j, a reference signal 560 is generated.

Therefore, each power conversion station in the interconnected system will receive from the VMS controller 500 a corresponding reference signal 560 to modify its active power, which will aggregate the individual contribution of all the virtual shafts that couple such power conversion station with the rest of stations in the system. There are multiple techniques that can be used to select the value of the virtual shaft parameters of the system, e.g., eigenvalue positioning from small signal analysis, frequency analysis for harmonic oscillations attenuation, passivity-based analysis, data-driven analysis, etc. In any case, these parameters can be modified in real-time to adapt the VMS controller to the operating conditions of the system at any time. It should be mentioned that the delays introduced by the communication systems between the local controllers of the VRCs and the system-level VMS controller affect the dynamic response of the system and must be considered when selecting the value of the virtual axis parameters.

Since the internal controllers of the power conversion stations in this preferred implementation are based on the SPC, Figure 10 shows the power loop controller, PLC, and voltage-controlled oscillator, VCO, blocks of the SPC. Likewise, a block for the droop and DC voltage controllers of the power converter is also shown in Figure 10. As already indicated above, the internal controller of the power conversion stations 01,02,03, and 04 could be based on any other control method for grid-connected converters than SPC. In such a case, the virtual rotating frequency used as an input to the VMS controller would be obtained from any other relevant magnitude of the power converter, e.g., from the grid frequency estimated by a PLL. It should be noted here that whereas the VMS controller depicted in Figure 10 generates active power reference signals 560 for the power conversion stations of the interconnected system, any other signal might be also used to control the power flow of the converter stations, e.g., an active current reference or virtual rotational frequency reference. It should be also mentioned that the power reference generated by the VMS controller must take into account the inherent limitations of the power conversion stations, e.g., in terms of current or voltage limitations on the dc bus to ensure safe system operation.

In order to illustrate the effectiveness of the VMS controller respect to other existing solutions, some simulation results are presented in the following when used in the actively interconnected system shown in Figure 8.

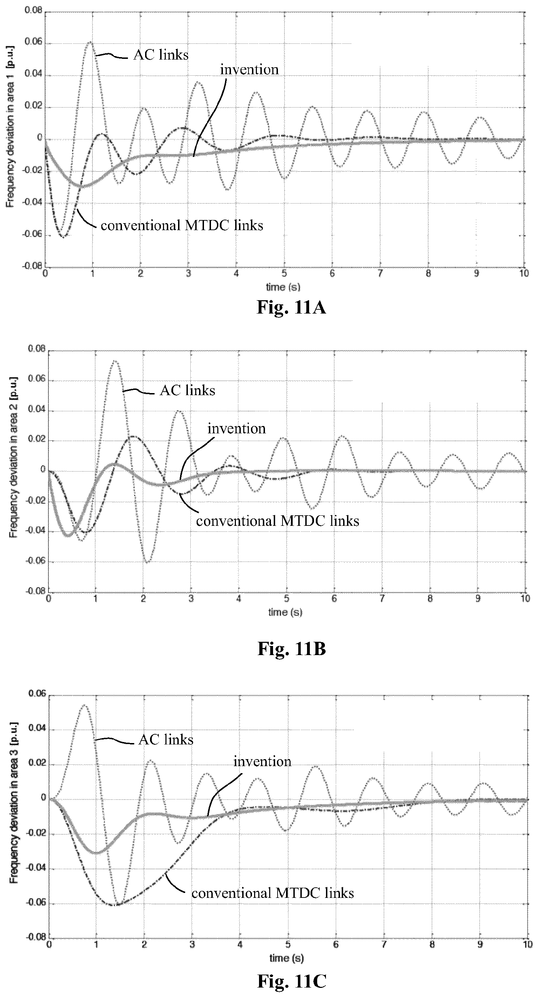

Figures 11A-C respectively present the dynamic frequency response in the respective three areas of the interconnected system of Figure 8 under an event of load connection of 0.03 p.u. in Area 1. To evaluate the impact of the VMS controller on the frequency response of the three interconnected areas of the system, the following interconnection cases and controllers are considered:

i) electrical ac areas interconnected through only passive AC tie-lines (AC links);
ii) electrical ac areas interconnected through both passive AC tie-lines and a MT-HVDC network with power conversion stations controlled by the described conventional system-level proportional control scheme (conventional MTDC links)
iii) electrical ac areas interconnected through both passive AC tie-lines and a MT-HVDC network with power conversion stations controlled by the control scheme shown in Figure 10, which includes the system-level VMS controller or control unit in accordance with a preferred embodiment of the invention (invention).

The results shown in Figures 11A-C evidence the positive impact of the proposed VMS controller in improving frequency stability and power distribution in the interconnected electrical areas in the event of disturbances. Indeed, the VMS improves significantly the dynamic performance of system, damping frequency oscillations in a more effective manner than in the case of using only passive ac tie-lines and a MT-HVDC system driven by a conventional system-level proportional controller, which eventually contributed to improve the dynamic stability of the system. The figures show how the VMS controller is able to significantly damp transient frequency oscillations after the first swing of the system, while the conventional proportional controller takes more time to attenuate such oscillations, which also have higher amplitude compared to the case of the VMS controller.

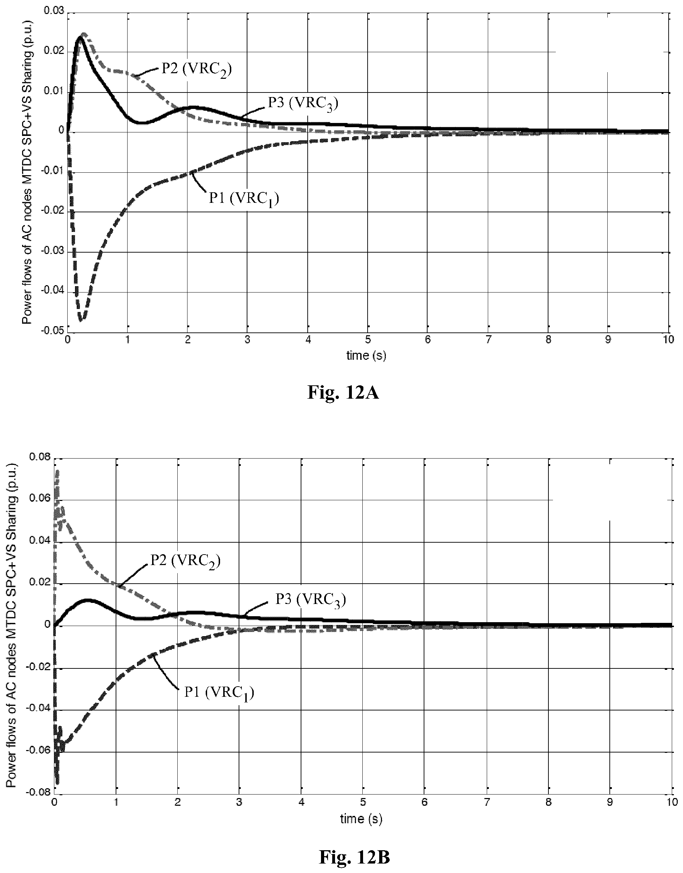

To evaluate the ability of the VMS controller to modulate the strength of dynamic support between coupled power stations, which allows to dynamically regulate the dynamic capacity that each power conversion station offers to the rest of virtually coupled stations in case the system is affected by a disturbance, three studies cases are analysed on the interconnected system of Figure 8 and results are shown in Figures 12A-C.

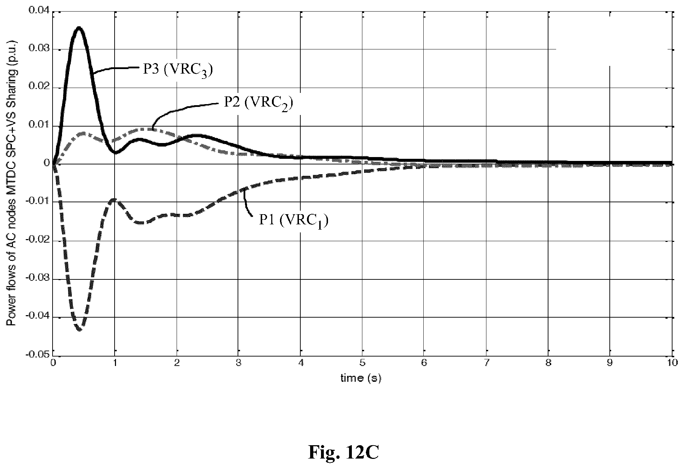

In this manner, Case A studies the dynamic power flow between the AC areas of Figure 8 when the MT-HVDC system is controlled through the described conventional high-level proportional scheme. The simulation results for Case A are shown in Figure 12A. In the second and third case study, i.e., in Case B and Case C, the VMS controller or control unit according to the invention is used to dynamically control the power exchanged between electrical AC areas through the power conversion stations of the MT- HVDC system. Dynamic active power sharing among power conversion station during transients is controlled through the use of different sets of parameters for the virtual shafts of the VMS controller, as described in Tables II and III for use cases B and C respectively. In this manner, Figure 12B shows how Area 1 and Area 2 have higher active power sharing than Area 3 when the set of parameters of Case B is used. Similarly, Figure 12C shows how Area 1 and Area 3 have higher active power sharing than Area 2 when the set of parameters of Case C is used. These results demonstrate the effectiveness of the VMS controller in regulating the dynamic active power sharing between different interconnected AC areas by just changing the set of parameters for the virtual shafts coupling the power stations of the system.

TABLE II: digital shaft model parameters for used case B

| From Area 1 | $D_{12}$ | $K_{12}$ | $H_{12}$ | $D_{13}$ | $K_{13}$ | $H_{13}$ |
|---|---|---|---|---|---|---|
| | 100 | 0.2 | 15 | 0.1 | 0.1 | 0.0 |
| From Area 2 | $D_{21}$ | $K_{21}$ | $H_{21}$ | $D_{23}$ | $K_{23}$ | $H_{23}$ |
| | 100 | 0.2 | 15 | 0.1 | 0.1 | 0.0 |

(continued)

| | $D_{31}$ | $K_{31}$ | $H_{31}$ | $D_{32}$ | $K_{32}$ | $H_{32}$ |
|---|---|---|---|---|---|---|
| From Area 3 | 0.1 | 0.1 | 0.0 | 0.1 | 0.1 | 0.0 |

TABLE III: digital shaft model parameters for use case C.

| | $D_{12}$ | $K_{12}$ | $H_{12}$ | $D_{13}$ | $K_{13}$ | $H_{13}$ |
|---|---|---|---|---|---|---|
| From Area 1 | 0.1 | 0.1 | 0.0 | 10 | 0.2 | 1.0 |
| | $D_{21}$ | $K_{21}$ | $H_{21}$ | $D_{23}$ | $K_{23}$ | $H_{23}$ |
| From Area 2 | 0.1 | 0.1 | 0.0 | 0.1 | 0.1 | 0.0 |
| | $D_{31}$ | $K_{31}$ | $H_{31}$ | $D_{32}$ | $K_{32}$ | $H_{32}$ |
| From Area 3 | 10 | 0.2 | 1.0 | 0.1 | 0.1 | 0.0 |

It should be understood that the detailed description of specific preferred embodiments is given by way of illustration only, since various changes and modifications within the scope of the invention will be apparent to the person skilled in the art. The scope of protection is defined by the following set of claims.

**Claims**

1. A control method for improving supply stability in a power network (1000, 2000, 3000, 4000, 5000), in which a first power converter (01) is electrically connected to at least one second power converter (02, 03, ... 0N) through a power grid (10), the method **characterized by** comprising the steps of:

   i) providing, for each pair of power converters composed of the first power converter (01) and one of the second power converters (02, 03, ..., 0N), a digital shaft model (12, 13, ..., 1N) of a mechanical shaft in a memory element (110, 210, 310), wherein said digital shaft model comprises a damping factor, an inertia and a stiffness of a mechanical shaft and emulates the electrical coupling between said pair of power converters through said power grid;
   ii) obtaining, at a control unit (100, 200, 300, 400), a pair of input signals (101,102; 101,103; ....,; 101,10N) from each of said pairs of power converters, wherein the input signals of a pair are indicative of rotating speeds applied to the ends of the corresponding digital shaft model;
   iii) determining an active power deviation (140, 240, 340) at the control unit, based on power transfers that are computed for each pair of power converters by applying a rotation equation to the corresponding digital shaft model using the corresponding pair of input signals;
   iv) at the control unit (100, 200, 300, 400), communicating a reference signal (160, 260, 360) to the first power converter (01), which allows the first power converter (01) to feed the active power deviation (140, 240, 340) into the power grid or to absorb the active power deviation (140, 240, 340) from the power grid, depending on the positivity of the active power deviation.

2. The control method according to claim 1, wherein the step of obtaining a pair of input signals comprises obtaining at least one signal indicating a rotating speed from at least one second power converter (02), wherein said second power converter emulates a mass rotating at said rotating speed.

3. The control method according to any of the previous claims, wherein the step of obtaining a pair of input signals comprises obtaining at least one measure of an AC grid frequency at the point of connection of at least one second power converter (02).

4. The control method according to any of the previous claims, wherein the step of obtaining a pair of input signals comprises obtaining at least one measure of a DC voltage of a DC bus of at least one second power converter (02).

5. The control method according to any of claims 1 to 4, wherein said reference signal (160, 260, 360) comprises an indication of an electrical current intensity to be injected by the first power converter into the electrical grid.

6. The control method according to any of claims 1 to 4, wherein the first power converter (01) is controlled as a rotating mass, and wherein said reference signal (160, 260, 360) comprises an indication of a load angle of the power converter.

7. The control method according to any of the preceding claims, wherein either the inertia or the stiffness, or both of the inertia and the stiffness of at least one digital shaft model are set to zero.

8. A control unit (100, 200, 300, 400) comprising

- a memory element (110, 210, 310) in which digital shaft models (11, 13, ..., 1N) are stored, each digital shaft model comprising a damping factor, an inertia and a stiffness of a mechanical shaft configured to emulate the electrical coupling between pairs of power converters (01,02, ..., 0N) electrically connected through a power grid (10), wherein each pair of power converters is composed of the same first power converter and one second power converter;
- receiving means (120, 220, 320) configured to receive a pair of input signals from each of said pairs of power converters, wherein the input signals of a pair are indicative of rotating speeds applied to the ends of the corresponding digital shaft model;
- computing means (130, 230, 330) configured to

   * determine an active power deviation (140, 240, 340), based on power transfers that are computed for each pair of power converters by applying a rotation equation to the corresponding digital shaft model using a corresponding obtained pair of input signals;
   * generate a reference signal (160, 260, 360), which allows the first power converter to feed the determined active power deviation into the power grid or to absorb the determined active power deviation from the power grid, depending on the positivity of the determined active power deviation;

- transmission means (150, 250, 350) configured to communicate said reference signal to the first power converter (01).

9. A control system (3500, 4500) comprising a plurality of control units (100, 200, 300, 400) in accordance with claim 8, wherein each control unit is configured to determine an active power deviation for one power converter of a plurality of power converters (01,02, ...., 0N) electrically interconnected through a power grid (10).

10. A power network (1000, 2000, 3000, 4000, 5000) in which a plurality of power converters (01,02, ...., 0N) are interconnected through a power grid (10), comprising at least one control unit (100, 200, 300, 400) in accordance with claim 8 for controlling at least one power converter.

11. The power network in accordance with claim 10, comprising a control system in accordance with claim 9.

12. A computer program comprising computer readable code means, which, when run on a computer system, causes the computer system to carry out the method according to claim 1.

13. The computer program according to claim 12, further comprising computer readable code means, which, when run on a computer system, causes the computer system to carry out the method according to any of claims 2 to 7.

14. A computer program product comprising a computer readable medium on which the computer program according to any of claims 12 or 13 is stored.

**Patentansprüche**

1. Eine Steuerungsmethode zur Verbesserung der Versorgungsstabilität in einem Stromnetz (1000, 2000, 3000, 4000, 5000), in dem ein erster Stromwandler (01) elektrisch mit mindestens einem zweiten Stromwandler (02, 03, ... 0N) über ein Stromnetz (10) verbunden ist, wobei die Methode **dadurch gekennzeichnet ist, dass** sie die folgenden Schritte umfasst:

   i) Bereitstellung eines digitalen Wellenmodells (12, 13, ... 1N) einer mechanischen Welle in einem Speicherelement (110, 210, 310) für jedes Paar von Stromwandlern, bestehend aus dem ersten Stromwandler (01) und

**EP 4 391 270 B1**

einem der zweiten Stromwandler (02, 03, ... 0N), wobei das digitale Wellenmodell einen Dämpfungsfaktor, eine Trägheit und eine Steifigkeit einer mechanischen Welle umfasst und die elektrische Kopplung zwischen dem Paar von Stromwandlern über das Stromnetz emuliert;

ii) Erhalt eines Paares von Eingangssignalen (101, 102; 101, 103; ... ; 101, 10N) von jedem der Paare von Stromwandlern an einer Steuereinheit (100, 200, 300, 400), wobei die Eingangssignale eines Paares die Drehgeschwindigkeiten anzeigen, die an den Enden des entsprechenden digitalen Wellenmodells angewendet werden; iii) Bestimmung einer aktiven Leistungsabweichung (140, 240, 340) an der Steuereinheit, basierend auf den Leistungsübertragungen, die für jedes Paar von Stromwandlern durch Anwendung einer Drehgleichung auf das entsprechende digitale Wellenmodell unter Verwendung des entsprechenden Paares von Eingangssignalen berechnet werden;

iv) Kommunikation eines Referenzsignals (160, 260, 360) an den ersten Stromwandler (01) an der Steuereinheit (100, 200, 300, 400), das es dem ersten Stromwandler (01) ermöglicht, die aktive Leistungsabweichung (140, 240, 340) in das Stromnetz einzuspeisen oder die aktive Leistungsabweichung (140, 240, 340) aus dem Stromnetz zu absorbieren, abhängig von der Positivität der aktiven Leistungsabweichung.

2. Die Steuerungsmethode nach Anspruch 1, wobei der Schritt des Erhaltens eines Paares von Eingangssignalen das Erhalten von mindestens einem Signal umfasst, das eine Drehgeschwindigkeit von mindestens einem zweiten Stromwandler (02) anzeigt, wobei der zweite Stromwandler eine Masse emuliert, die sich mit der Drehgeschwindigkeit dreht.

3. Die Steuerungsmethode nach einem der vorhergehenden Ansprüche, wobei der Schritt des Erhaltens eines Paares von Eingangssignalen das Erhalten von mindestens einer Messung der Netzfrequenz an dem Verbindungspunkt von mindestens einem zweiten Stromwandler (02) umfasst.

4. Die Steuerungsmethode nach einem der vorhergehenden Ansprüche, wobei der Schritt des Erhaltens eines Paares von Eingangssignalen das Erhalten von mindestens einer Messung einer Gleichspannung eines Gleichspannungsbusses von mindestens einem zweiten Stromwandler (02) umfasst.

5. Die Steuerungsmethode nach einem der Ansprüche 1 bis 4, wobei das Referenzsignal (160, 260, 360) eine Angabe der elektrischen Stromstärke umfasst, die vom ersten Stromwandler in das Stromnetz eingespeist werden soll.

6. Die Steuerungsmethode nach einem der Ansprüche 1 bis 4, wobei der erste Stromwandler (01) als rotierende Masse gesteuert wird und wobei das Referenzsignal (160, 260, 360) eine Angabe eines Lastwinkels des Stromwandlers umfasst.

7. Die Steuerungsmethode nach einem der vorhergehenden Ansprüche, wobei entweder die Trägheit oder die Steifigkeit, oder sowohl die Trägheit als auch die Steifigkeit von mindestens einem digitalen Wellenmodell auf null gesetzt werden.

8. Eine Steuereinheit (100, 200, 300, 400) umfassend

- ein Speicherelement (110, 210, 310), in dem digitale Wellenmodelle (11, 13, ... , 1N) gespeichert sind, wobei jedes digitale Wellenmodell einen Dämpfungsfaktor, eine Trägheit und eine Steifigkeit einer mechanischen Welle umfasst, die konfiguriert ist, die elektrische Kopplung zwischen Paaren von Stromwandlern (01, 02, ... , 0N), die elektrisch über ein Stromnetz (10) verbunden sind, zu emulieren, wobei jedes Paar von Stromwandlern aus demselben ersten Stromwandler und einem zweiten Stromwandler besteht;

- Empfangsmittel (120, 220, 320), die konfiguriert sind, ein Paar von Eingangssignalen von jedem der Paare von Stromwandlern zu empfangen, wobei die Eingangssignale eines Paares die Drehgeschwindigkeiten anzeigen, die an den Enden des entsprechenden digitalen Wellenmodells angewendet werden;

- Berechnungsmittel (130, 230, 330), die konfiguriert sind,

• eine aktive Leistungsabweichung (140, 240, 340) zu bestimmen, basierend auf Leistungsübertragungen, die für jedes Paar von Stromwandlern durch Anwendung einer Drehgleichung auf das entsprechende digitale Wellenmodell unter Verwendung eines entsprechenden erhaltenen Paares von Eingangssignalen berechnet werden;

• ein Referenzsignal (160, 260, 360) zu erzeugen, das es dem ersten Stromwandler ermöglicht, die bestimmte aktive Leistungsabweichung in das Stromnetz einzuspeisen oder die bestimmte aktive Leistungsabweichung aus dem Stromnetz zu absorbieren, abhängig von der Positivität der bestimmten aktiven Leistungsabweichung;

- Übertragungsmittel (150, 250, 350), die konfiguriert sind, das Referenzsignal an den ersten Stromwandler (01) zu kommunizieren.

9. Ein Steuerungssystem (3500, 4500) umfassend eine Vielzahl von Steuereinheiten (100, 200, 300, 400) gemäß Anspruch 8, wobei jede Steuereinheit konfiguriert ist, eine aktive Leistungsabweichung für einen Stromwandler einer Vielzahl von Stromwandlern (01, 02, ... , 0N), die elektrisch über ein Stromnetz (10) miteinander verbunden sind, zu bestimmen.

10. Ein Stromnetz (1000, 2000, 3000, 4000, 5000), in dem eine Vielzahl von Stromwandlern (01, 02, ... , 0N) über ein Stromnetz (10) miteinander verbunden sind, umfassend mindestens eine Steuereinheit (100, 200, 300, 400) gemäß Anspruch 8 zur Steuerung von mindestens einem Stromwandler.

11. Das Stromnetz gemäß Anspruch 10, umfassend ein Steuerungssystem gemäß Anspruch 9.

12. Ein Computerprogramm umfassend computerlesbare Codemittel, die, wenn sie auf einem Computersystem ausgeführt werden, das Computersystem veranlassen, die Methode gemäß Anspruch 1 auszuführen.

13. Das Computerprogramm gemäß Anspruch 12, weiter umfassend computerlesbare Codemittel, die, wenn sie auf einem Computersystem ausgeführt werden, das Computersystem veranlassen, die Methode gemäß einem der Ansprüche 2 bis 7 auszuführen.

14. Ein Computerprogrammprodukt umfassend ein computerlesbares Medium, auf dem das Computerprogramm gemäß einem der Ansprüche 12 oder 13 gespeichert ist.

**Revendications**

1. Une méthode de contrôle pour améliorer la stabilité de l'approvisionnement dans un réseau de puissance (1000, 2000, 3000, 4000, 5000), dans lequel est connecté électriquement à au moins un deuxième convertisseur de puissance (02, 03, ... 0N) à travers un réseau de puissance (10), la méthode étant **caractérisé en ce qu'**elle comprend les étapes de :

   i) fournir, pour chaque paire de convertisseurs de puissance composée du premier convertisseur de puissance (01) et de l'un des deuxièmes convertisseurs de puissance (02, 03, ... , 0N), un modèle d'arbre numérique (12, 13, ... , 1N) d'un arbre mécanique dans un élément de mémoire (110, 210, 310), où ledit modèle d'arbre numérique comprend un facteur d'amortissement, une inertie et une rigidité d'un arbre mécanique et émule le couplage électrique entre ladite paire de convertisseurs de puissance à travers ledit réseau de puissance;
   ii) obtenir, à une unité de contrôle (100, 200, 300, 400), une paire de signaux d'entrée (101, 102; 101, 103; .... ,; 101, 10N) de chacune desdites paires de convertisseurs de puissance, où les signaux d'entrée d'une paire sont indicatifs des vitesses de rotation appliquées aux extrémités du modèle d'arbre numérique correspondant;
   iii) déterminer une déviation de puissance active (140, 240, 340) à l'unité de contrôle, basée sur les transferts de puissance qui sont calculés pour chaque paire de convertisseurs de puissance en appliquant une équation de rotation au modèle d'arbre numérique correspondant en utilisant la paire de signaux d'entrée correspondante;
   iv) à l'unité de contrôle (100, 200, 300, 400), communiquer un signal de référence (160, 260, 360) au premier convertisseur de puissance (01), ce qui permet au premier convertisseur de puissance (01) d'injecter la déviation de puissance active (140, 240, 340) dans le réseau de puissance ou d'absorber la déviation de puissance active (140, 240, 340) du réseau de puissance, en fonction de la positivité de la déviation de puissance active.

2. La méthode de contrôle selon la revendication 1, où l'étape d'obtention d'une paire de signaux d'entrée comprend l'obtention d'au moins un signal indiquant une vitesse de rotation d'au moins un deuxième convertisseur de puissance (02), où ledit deuxième convertisseur de puissance émule une masse tournant à ladite vitesse de rotation.

3. La méthode de contrôle selon l'une des revendications précédentes, où l'étape d'obtention d'une paire de signaux d'entrée comprend l'obtention d'au moins une mesure de la fréquence du réseau AC au point de connexion d'au moins un deuxième convertisseur de puissance (02).

4. La méthode de contrôle selon l'une des revendications précédentes, où l'étape d'obtention d'une paire de signaux d'entrée comprend l'obtention d'au moins une mesure d'une tension DC d'un bus DC d'au moins un deuxième convertisseur de puissance (02).

5. La méthode de contrôle selon l'une des revendications 1 à 4, où ledit signal de référence (160, 260, 360) comprend une indication de l'intensité du courant électrique à injecter par le premier convertisseur de puissance dans le réseau électrique.

6. La méthode de contrôle selon l'une quelconque des revendications 1 à 4, où le premier convertisseur de puissance (01) est contrôlé comme une masse tournante, et où ledit signal de référence (160, 260, 360) comprend une indication d'un angle de charge du convertisseur de puissance.

7. La méthode de contrôle selon l'une quelconque des revendications précédentes, où soit l'inertie, soit la rigidité, soit les deux, l'inertie et la rigidité d'au moins un modèle d'arbre numérique sont réglées à zéro.

8. Une unité de contrôle (100, 200, 300, 400) comprenant

   - un élément de mémoire (110, 210, 310) dans lequel des modèles d'arbre numérique (11, 13, ... , 1N) sont stockés, chaque modèle d'arbre numérique comprenant un facteur d'amortissement, une inertie et une rigidité d'un arbre mécanique configuré pour émuler le couplage électrique entre des paires de convertisseurs de puissance (01,02, ... , 0N) connectés électriquement à travers un réseau de puissance (10), où chaque paire de convertisseurs de puissance est composée du même premier convertisseur de puissance et d'un deuxième convertisseur de puissance;
   - des moyens de réception (120, 220, 320) configurés pour recevoir une paire de signaux d'entrée de chacune desdites paires de convertisseurs de puissance, où les signaux d'entrée d'une paire sont indicatifs des vitesses de rotation appliquées aux extrémités du modèle d'arbre numérique correspondant;
   - des moyens de calcul (130, 230, 330) configurés pour

      • déterminer une déviation de puissance active (140, 240, 340), basée sur les transferts de puissance qui sont calculés pour chaque paire de convertisseurs de puissance en appliquant une équation de rotation au modèle d'arbre numérique correspondant en utilisant une paire de signaux d'entrée obtenue correspondante;
      • générer un signal de référence (160, 260, 360), ce qui permet au premier convertisseur de puissance d'injecter la déviation de puissance active déterminée dans le réseau de puissance ou d'absorber la déviation de puissance active déterminée du réseau de puissance, en fonction de l positivité de la déviation de puissance active déterminée;

   - des moyens de transmission (150, 250, 350) configurés pour communiquer ledit signal de référence au premier convertisseur de puissance (01).

9. Un système de contrôle (3500, 4500) comprenant une pluralité d'unités de contrôle (100, 200, 300, 400) conformément à la revendication 8, où chaque unité de contrôle est configurée pour déterminer une déviation de puissance active pour un convertisseur de puissance d'une pluralité de convertisseurs de puissance (01,02, .... , 0N) interconnectés électriquement à travers un réseau de puissance (10).

10. Un réseau de puissance (1000, 2000, 3000, 4000, 5000) dans lequel une pluralité de convertisseurs de puissance (01,02, .... , 0N) sont interconnectés à travers un réseau de puissance (10), comprenant au moins une unité de contrôle (100, 200, 300, 400) conformément à la revendication 8 pour contrôler au moins un convertisseur de puissance.

11. Le réseau de puissance conformément à la revendication 10, comprenant un système de contrôle conformément à la revendication 9.

12. Un programme informatique comprenant des moyens de code lisibles par ordinateur, qui, lorsqu'il est exécuté sur un système informatique, amène le système informatique à réaliser la méthode selon la revendication 1.

13. Le programme informatique selon la revendication 12, comprenant en outre des moyens de code lisibles par ordinateur, qui, lorsqu'il est exécuté sur un système informatique, amène le système informatique à réaliser la méthode selon l'une quelconque des revendications 2 à 7.

14. Un produit de programme informatique comprenant un support lisible par ordinateur sur lequel le programme informatique selon l'une quelconque des revendications 12 ou 13 est stocké.

1000

160

100

01

101

120

150

140

D,H,K

12

110

10

120

130

02

102

**Fig. 1**

2000

260

200

01

101

220

250

240

03

10

12
13
...
1N

210

02

102

230

220

10N

0N

103

**Fig. 2**

3000

360(1)

360(N)

360(2)

300,3500

340(1)

350

101

340(2)

340(N)

12
13
...
1N

21
23
...
2N

N1
N2
...

102

310

...

10N

320

330

**Fig. 3**

12

101                          102

$\omega_i$                    $\omega_j$

$H_{ij}$

$K_{ij}$

$D_{ij}$

**Fig. 4**

4500,400

Virtual
multi-shaft
controller

4000

101,102,103,104

Area
1

Area
2

01    Station
      1

Station
2    02

10

14

10

04    Station
      N

Station
3    03

Area
N

Area
3

**Fig. 5**

**Fig. 6**

**Fig. 7**

**Fig. 8**

**Fig. 9**

**Fig. 10**

**Fig. 11A**

**Fig. 11B**

**Fig. 11C**

Fig. 12A

Fig. 12B

**Fig. 12C**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. KUNDUR**. Power System Stability and Control. McGraw-Hill Education, 1994
- **G. GURRALA** ; **I. SEN**. Power System Stabilizers Design for Interconnected Power Systems. *IEEE Trans. Power Syst.*, May 2010, vol. 25 (2), 1042-1051
- **N. SENROY** ; **G. T. HEYDT**. A Conceptual Framework for the Controlled Islanding of Interconnected Power Systems. *IEEE Trans. Power Syst.*, May 2006, vol. 21 (2), 1005-1006
- **G. CAO** ; **Z. Y. DONG** ; **Y. WANG** ; **P. ZHANG** ; **Y. T. OH**. VSC based STATCOM controller for damping multi-mode oscillations. *2008 IEEE Power and Energy Society General Meeting - Conversion and Delivery of Electrical Energy in the 21st Century*, 2008, 1-8
- **F. H. GANDOMAN et al.** Review of FACTS technologies and applications for power quality in smart grids with renewable energy systems. *Renew. Sustain. Energy Rev.*, February 2018, vol. 82, 502-514
- **K. M. SON** ; **J. K. PARK**. On the robust LQG control of TCSCfor damping power system oscillations. *IEEE Trans. Power Syst.*, 2000, vol. 15 (4), 1306-1312

- **Q. HUI** ; **J. YANG** ; **X. YANG** ; **Z. CHEN** ; **Y. LI** ; **Y. TENG**. A robust control strategy to improve transient stability for AC-DC interconnected power system with wind farms. *CSEE J. Power Energy Syst.*, June 2019
- Virtual synchronous machine. **H. P. BECK** ; **R. HESSE**. 2007 9th International Conference on Electrical Power Quality and Utilisation. EPQU, 2007, 1-6
- **A. TAYYEBI** ; **D. GROß** ; **A. ANTA** ; **F. KUPZOG** ; **F. DÖRFLER**. Frequency stability of synchronous machines and grid-forming power converters. *arXiv*, 2020, vol. 8 (2), 1004-1018
- **W. ZHANG** ; **D. REMON** ; **J. ROCABERT** ; **A. LUNA** ; **J. I. CANDELA** ; **P. RODRIGUEZ**. Frequency support properties of the synchronous power control for grid-connected converters. *ECCE 2016 - IEEE Energy Convers. Congr. Expo. Proc.*, 2016
- **K. S. SKINDER** ; **T. KERDPHOL** ; **Y. MITANI** ; **D. TURSCHNER**. Frequency Stability Assessment of Multiple Virtual Synchronous Generators for Interconnected Power Systems. *IEEE Trans. Ind. Appl.*, 2021, vol. PP (c), 1-1